# EUROPÄISCHE PATENTSCHRIFT

(11) **EP 0 440 853 B1**
(45) Veröffentlichungstag und Bekanntmachung des Hinweises auf die Patenterteilung: **18.05.1994**
(21) Anmeldenummer: 90102430.7
(22) Anmeldetag: 07.02.1990
(51) Int. Cl.: G01T 1/29, G01T 1/20

(54) **Speicherleuchtschirm mit einem stimulierbaren Speicherleuchtstoff**
Stimulable luminescent storage panel
Ecran de mémoire luminescent stimulable

(43) Veröffentlichungstag der Anmeldung: 14.08.1991
(73) Patentinhaber: SIEMENS AKTIENGESELLSCHAFT, 80333 München (DE)
(72) Erfinder: Brandner, Gerhard, Dipl.-Chem. Dr. rer. nat., D-8502 Zirndorf (DE); Höbel, Peter, Dipl.-Ing., D-8520 Erlangen (DE)

(56) Entgegenhaltungen:
- EP-A- 0 233 497
- US-A- 4 380 702
- US-A- 4 778 995

## Beschreibung

Die Erfindung betrifft einen Speicherleuchtschirm mit einem stimulierbaren Speicherleuchtstoff für die latente Speicherung von Röntgenstrahlenbildern, bei dem die Auslesung der Röntgenstrahlenbilder durch Anregung mittels Strahlen einer ersten Wellenlänge erfolgt, worauf Strahlen einer zweiten Wellenlänge emittiert werden, die von einem Detektor erfaßt werden. Ein derartiger Speicherleuchtschirm ist beispielsweise aus der EP-A-0 174 875 bekannt.

Derartige Speicherleuchtschirme werden bei Bildaufnahmevorrichtungen verwendet, wie sie beispielsweise in der DE-C-23 63 995 beschrieben ist. In einer derartigen Röntgendiagnostikeinrichtung wird als strahlenempfindlicher Wandler ein Speicherleuchtschirm aus einem Lumineszenz-Speicherleuchtstoff verwendet, der mit Röntgenstrahlen bestrahlt wird. Dadurch werden in dem Speicherleuchtstoff entsprechend der auftreffenden Strahlstärke Defektelektronen erzeugt, die in Potentialfallen (Traps) mit höherem Energieniveau gespeichert werden, so daß in dem Speicherleuchtschirm ein latentes Röntgenstrahlenbild gespeichert ist.

In einer Auslesevorrichtung wird die ganze Fläche dieses Speicherleuchtschirmes als Vorlage von einer zusätzlichen Strahlenquelle, dies kann beispielsweise ein Laser sein, bildpunktweise zum Leuchten angeregt. Durch die stimulierenden Strahlen werden die in den Traps gespeicherten Elektronen im Energieniveau angehoben und können in niedrigere Energieniveaus zurückfallen, wobei die Energiedifferenz in Form von Lichtquanten abgestrahlt wird. Dadurch emittiert der Speicherleuchtstoff Licht in Abhängigkeit von der in dem Speicherleuchtstoff gespeicherten Energie. Das auf Grund der Stimulation emittierte Licht wird detektiert und sichtbar gemacht, so daß das in dem Speicherleuchtstoff derart latent gespeicherte Röntgenstrahlenbild auslesbar ist.

Als Problem zeigt sich hierbei, daß der Speicherleuchtstoff für das Laserlicht nicht ausreichend transparent ist. Um ausreichende Röntgenquantenabsorptionen erzielen zu können, benötigt man eine Mindestdicke des Speicherleuchtstoffes. Im Falle eines nichttransparenten, dicht gepreßten oder gesinterten Leuchtstoffes wird der Laserstrahl durch den Leuchtstoff so stark geschwächt, daß die Eindringtiefe des Laserstrahles zu gering ist. Da die Energie nicht mehr ausreicht, die Defektelektronen auf das für die Rekombination erforderliche Energieniveau anzuheben, können die in den tieferen Schichten gespeicherten Informationen nicht mehr ausgelesen werden.

Ein solcher Speicherleuchtschirm ist in der EP-A-0 188 274 beschrieben, bei dem auf der Eintrittsseite eine dünne Schicht vorgesehen ist, die Reflexionen reduziert. Da der Speicherleuchtstoff aufgrund von Einfärbungen opak ist, ist die nahezu vollständige Einkopplung des Anregungsstrahles in den Speicherleuchtschirm unbedingt erforderlich, um den entsprechenden anzuregenden Bildpunkt möglichst vollständig auslesen zu können. Die gegenüberliegende Seite der Auskopplung des emittierten Lichtes kann mit lichtabsorbierendem oder reflektierendem Material beschichtet sein. Da der Speicherleuchtstoff opak ist, treten beim Austritt des Anregungsstrahles, der stark geschwächt ist, nur geringe oder keine Reflektionen mehr auf, die wiederum durch das opake Material geschwächt werden.

In der EP-A-0 174 875 ist ein Speicherleuchtschirm beschrieben, bei dem die Leuchtstoffkörner des Speicherleuchtstoffes von einem Binder umhüllt auf eine Unterlage aufgebracht werden. Der Binder dient dabei zum Fixieren der Leuchtstoffkörner. Als Binder wird üblicherweise ein lichtdurchlässiges Trägermaterial verwendet, das sowohl für das anregende Laserlicht als auch für das emittierte Lumineszenzlicht transparent ist. Hierbei tritt aber das Problem auf, daß durch Streuung an den Leuchtstoffkörnern der Laserstrahl mit anwachsender Eindringtiefe immer breiter wird, so daß sich die Modulationsübertragungsfunktion des gesamten Systems verschlechtert. Auch weist ein Speicherleuchtschirm in der Bindertechnik bei vergleichbarer Schichtdicke des Speicherleuchtstoffes eine geringere Röntgenquantenabsorption auf.

Vorteilhafter ist jedoch, den Speicherleuchtstoff im Hochvakuum auf einen Träger aufzudampfen und in einer Schutzgasatmosphäre oder im Vakuum zu tempern oder ihn unter Vakuum und/oder Erwärmung zu pressen, wie dies in der EP-A-0 369 049 beschrieben ist. Es besteht auch die Möglichkeit, Speicherleuchtstoff-Einkristalle durch Pressen gemaß dem in einer Parallelanmeldung beschriebenen Verfahren auf die für medizinische Diagnostik erforderliche große Fläche umzuformen. Die letztgenannten Verfahren liefern transparente Speicherleuchtstoffplatten. Der Vor teil der Transparenz ist, daß der auslesende Laserstrahl in dem Speichermedium nicht durch Streuung an Körnern des Materials aufgefächert werden kann. Die Verbreitung des Auslesestrahles durch Streuung verschlechtert die Modulationsübertragungsfunktion des gesamten Systems erheblich. Durch die Verwendung eines transparenten Speicherleuchtstoffes, hergestellt beispielsweise durch Pressen des Leuchtstoffpulvers, wird die Verbreiterung des Laserstrahles beim Durchstrahlen des Speichermediums stark vermindert.

In der DE-A-32 06 776 ist ebenfalls ein Speicherleuchtschirm beschrieben, der für von dem Leuchtstoff emittiertes Licht transparent ist. Durch geeignete Maßnahmen wird darauf geachtet, daß die Brechungsindizes der verschiedenen Materialien innerhalb des Speicherleuchtschirmes nahezu gleich sind.

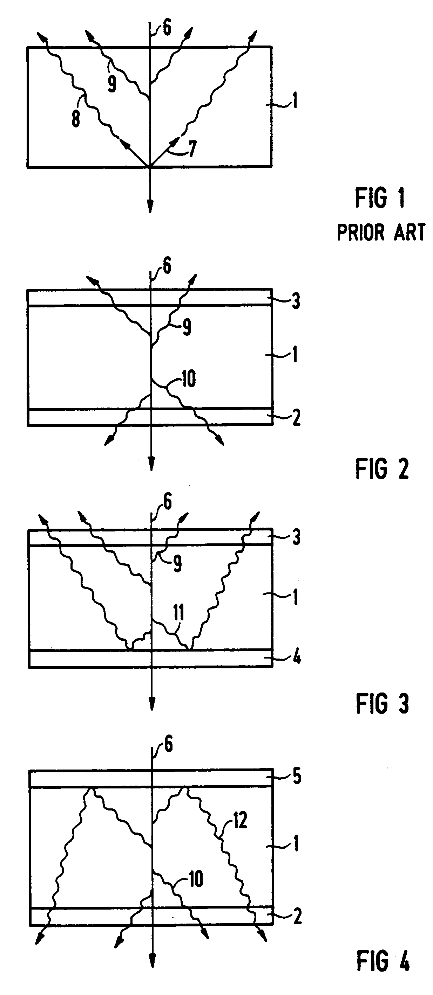

Viel stärker als bei den nichttransparenten Schichten stellt sich hier das Problem der Reflexion der anregenden elektromagnetischen Strahlung einer ersten Wellenlänge an der Rückseite der Speicherleuchtstoffschicht. Anhand der FIG 1 wird nun diese Problematik näher erläutert. In dem Speicherleuchtschirm 1, der beispielsweise aus einem Träger und einem darauf aufgetragenen Binder mit Speicherleuchtstoff oder aber auch aus einem Einkristall bestehen kann, dringt zur bildpunktweisen Auslesung des Röntgenbildes der anregende Strahl 6 mit einer ersten Wellenlänge ein. Dort trifft er auf den Speicherleuchtstoff, der durch seine Anregung Strahlen 9 einer zweiten Wellenlänge emittiert. Beim Austritt des Strahles 6 aus dem Speicherleuchtschirm 1 entstehen durch Reflexionen zurück in den Speicherleuchtschirm 1 Strahlen 7, die wiederum auf Leuchtstoffteilchen treffen, und somit durch die Anregung Strahlen 8 der zweiten Wellenlänge emittieren. Diese Strahlen 8 und 9 treten aus dem Speicherleuchtschirm 1 aus und werden von einem nicht dargestellten Detektor erfaßt. Dadurch empfangt der Detektor auch die Strahlen 8, die anderen Orten des Speicherleuchtschirmes 1 zugeordnet sind, die entweder zeitlich früher oder später abgetastet werden sollten. Dadurch verschlechtert die nicht zum derzeitig durch den Anregungsstrahl 6 abgetasteten Bildpunkt gehörende Information die Auflösung des resultierenden Bildes, weil die Strahlen 8 als Untergrundstahlung den Störabstand verringern.

Die Erfindung geht von der Aufgabe aus, einen Speicherleuchtschirm der eingangs genannten Art zu schaffen, der eine hohe Röntgenquantenabsorption bei hoher Abbildungsschärfe und guter Modulationsübertragungsfunktion aufweist und bei dem störende Einflüsse von Reflexionen vermieden werden.

Die Aufgabe wird erfindungsgemäß dadurch gelöst, daß der Speicherleuchtstoff im Bereich der beiden Wellenlängen transparent ist und daß der Speicherleuchtschirm mit wenigstens einer optischen Oberflächenvergütungsschicht versehen ist, die die beim Austreten der Strahlen erster Wellenlänge aus dem Speicherleuchtschirm auftretenden Reflexionen verringert.

Es hat sich als zweckmäßig erwiesen, wenn auf einer Seite des Speicherleuchtschirmes eine Anti-Reflexionsschicht aufgebracht ist. Die Lichtausbeute läßt sich erhohen, wenn ein wellenlängenselektiver Spiegel auf einer Seite des Speicherleuchtschirmes aufgebracht ist, der für die Strahlen der ersten Wellenlänge eine Anti-Reflexionsschicht und für die Strahlen der zweiten Wellenlänge eine Reflexionsschicht bildet. Dadurch wird erreicht, daß die Anregungsstrahlen ohne Reflexionen aus dem Speicherleuchtschirm heraustreten, während die angeregten Strahlen in Richtung des Detektors reflektiert werden, so daß sie zum Signal beitragen können.

Eine Erfassung der ausgelesenen Strahlen in Reflexion kann erfolgen, wenn der wellenlängenselektive Spiegel auf der Rückseite des Speicherleuchtschirmes angebracht ist, aus der die Strahlen der ersten Wellenlänge austreten. Eine vollständige Einkopplung der Anregungsstrahlen in den Speicherleuchtschirm und eine möglichst vollständiger Austritt der angeregten Strahlen erfolgt, wenn die Vorderseite des Speicherleuchtschirmes mit einer Entspiegelungsschicht versehen ist, in die die Strahlen der ersten Wellenläge eintreten.

Eine Erfassung der angeregten Strahlung in Transmission kann erfolgen, wenn der wellenlängenselektive Spiegel auf der Vorderseite des Speicherleuchtschirmes angebracht ist, in die die Strahlen der ersten Wellenlänge eintreten, und wenn auf der RücksSeite eine Anti-Reflexionsschicht angeordnet ist.

Die Erfindung ist nachfolgend anhand von in der Zeichnung dargestellten Ausführungsbeispielen näher erläutert. Es zeigen:
- FIG 1: einen Speicherleuchtschirm nach dem Stand der Technik und
- FIG 2 bis 4: verschiedene Ausführungsformen des Speicherleuchtschirmes mit verschiedenen erfindungsgemäßen Oberflächenvergütungsschichten.

In FIG 2 ist der Speicherleuchtschirm 1 dargestellt, in den wiederum der anregende Strahl 6 der ersten Wellenlänge eindringt. Auf der Rückseite des Speicherleuchtschirmes 1, der Seite, an dem der Strahl 6 aus dem Speicherleuchtschirm 1 austritt, ist eine Anti-Reflexionsschicht 2 angebracht, die eine Reflexion des Strahles 6 an der Übergangsschicht verhindert. Dadurch tritt der Strahl 6 ungehindert und ohne Reflexion aus. Im Speicherleuchtschirm 1 regt der Strahl 6 bildpunktweise den Leuchtstoff an, der Strahlen 9 und 10 emittiert. Der Detektor, der das emittierte Licht empfangt, kann hierbei entweder auf der Vorderseite des Speicherleuchtschirmes, der Seite des Eintrittes des Strahles 6 in den Speicherleuchtschirm 1, zum Empfang der Strahlen 9 oder auf der Rückseite des Speicherleuchtschirmes 1 zum Empfang der Strahlen 10 angeordnet sein. Es können aber auch zwei Detekoren beidseitig des Speicherleuchtschirmes 1 vorgesehen sein. Auf der Vorderseite des Speicherleuchtschirmes 1 kann noch eine breitbandige Entspiegelungsschicht 3 vorgesehen sein, damit der anregende Strahl 6 möglichst vollständig in den Speicherleuchtschirm 1 eingekoppelt werden kann und die emittierten Strahlen 9 möglichst vollständig austreten können.

In FIG 3 ist eine weitere Ausführungsform eines Speicherleuchtschirmes 1 dargestellt, der in Reflexion ausgelesen wird. Auf der Rückseite des Speicherleuchtschirms 1 ist ein wellenselektiver Spiegel 4 angebracht, der für die Strahlen 6 der ersten Wellenlänge eine Anti-Reflexionsschicht und für die Strahlen 11 der zweiten Wellenlänge eine Reflexionsschicht bildet. Dadurch gelangen nicht nur die Strahlen 9 sondern auch die Strahlen 11 auf die Seite des Detektors, so daß nur ein Detektor ausreicht, um sämtliche emittierten Strahlen 9 bis 11 zu erfassen. Auch bei dieser Anordnung ist der Speicherleuchtschirm mit einer Entspiegelungsschicht 3 versehen.

In FIG 4 ist eine weitere Ausführungsform des Speicherleuchtschirmes 1 dargestellt, bei dem die Auslesung in Transmission, d.h. auf der Rückseite des Speicherleuchtschirmes, erfolgt. In diesem Falle ist der Speicherleuchtschirm auf der Eintrittsseite des Strahles 6 mit einem wellenlängenselektiven Spiegel 5 versehen, der für den Strahl 6 als Entspiegelungsschicht und für die emittierten Strahlen 12 als Reflexionsschicht wirkt. Die Rückseite des Speicherleuchtschirmes 1 ist mit einer Anti-Reflexschicht 2 versehen, so daß sowohl der Strahl 6 als auch die Strahlen 10 und 12 unreflektiert aus dem Speicherleuchtschirm heraustreten und die Strahlen 10 und 12 vom Detektor vollständig erfaßt werden können.

Als Speicherleuchtstoff für den Speicherleuchtschirm 1 kann beispielsweise eine transparente Platte aus Rubidiumbromid (RbBr) verwendet werden, das im Verhältnis 0,01 bis 1 Mol-% mit Thalliumbromid (TlBr) dotiert ist. Die Auslesung der gespeicherten Information kann durch einen Strahl 6 eines HeNe-Laser der Wellenlänge 633 nm erfolgen. Die emittierten Strahlen 8 bis 12 weisen dabei eine Wellenlänge von 400 bis 420 nm auf. Der Laserstrahl 6 ist beispielsweise auf eine Breite von 50 µm fokussiert. Der Detektor und der Laser befinden sich auf derselben Seite des Speicherleuchtschirmes 1, so daß die Auslesung in Reflexion erfolgt. Die andere Seite des Speicherleuchtschirmes wird im Hochvakuum mit einem wellenlängenselektiven Spiegel 4 bedampft, der eine hohe Transmission für elektromagnetische Strahlen der Wellenlänge 633 nm (beispielsweise > 99%) aufweist und der gleichzeitig eine hohe Reflexion für einen Wellenlängenbereich von 400 bis 420 nm hat (beispielsweise > 90%). Ein solcher Strahlenteiler kann z.B. aus einem Mehrschichtensystem von Kryolith Na3AlF6 und ZnS bestehen. Die Anzahl und die Gitterschichten müssen auf die zu separierenden Wellenlängen der elektromagnetischen Strahlung optimiert sein.

Dadurch erhalt man einen Speicherleuchtschirm, der durch die Verwendung eines transparenten Speicherleuchtstoffes eine hohe Röntgenquantenabsorption bei hoher Abbildungsschärfe und guter Modulationsübertragungsfunktion aufweist und bei dem durch die Verwendung von Oberflächenvergütungsschichten 2 bis 5 störende Einflüssen von Reflexionen vermieden werden.

## Patentansprüche

1. Speicherleuchtschirm (1) mit einem stimulierbaren Speicherleuchtstoff für die latente Speicherung von Röntgenstrahlenbildern, bei dem die Auslesung der Röntgenbilder durch Anregung mittels Strahlen (6) einer ersten Wellenlänge erfolgt, worauf Strahlen (8 bis 12) einer zweiten Wellenlänge emittiert werden, die von einem Detektor erfaßt werden, **dadurch gekennzeichnet,** daß der Speicherleuchtstoff im Bereich der beiden Wellenlängen transparent ist und daß der Speicherleuchtschirm (1) mit wenigstens einer optischen Oberflächenvergütungsschicht (2, 4) versehen ist, die die beim Austreten der Strahlen erster Wellenlänge aus dem Speicherleuchtschirm auftretenden Reflexionen verringert.

2. Speicherleuchtschirm nach Anspruch 1, **dadurch gekennzeichnet,** daß auf einer Seite des Speicherleuchtschirmes (1) eine Anti-Reflexionsschicht (2) aufgebracht ist.

3. Speicherleuchtschirm nach Anspruch 1 oder 2, **dadurch gekennzeichnet,** daß ein wellenlängenselektiver Spiegel (4, 5) auf einer Seite des Speicherleuchtschirmes (1) aufgebracht ist, der für die Strahlen (6, 7) der ersten Wellenlänge eine Anti-Reflexionsschicht und für die Strahlen (8 bis 12) der zweiten Wellenlänge eine Reflexionsschicht bildet.

4. Speicherleuchtschirm nach einem der Ansprüche 1 bis 3, **dadurch gekennzeichnet,** daß der wellenlängenselektive Spiegel (4) auf der Rückseite des Speicherleuchtschirmes (1) angebracht ist, aus der die Strahlen (6) der ersten Wellenlänge austreten.

5. Speicherleuchtschirm nach einem der Ansprüche 1 bis 4, **dadurch gekennzeichnet,** daß die Vorderseite des Speicherleuchtschirmes (1) mit einer Entspiegelungsschicht (3) versehen ist, in die die Strahlen (6) der ersten Wellenlänge eintreten.

6. Speicherleuchtschirm nach Anspruch 3, **dadurch gekennzeichnet,** daß der wellenlängenselektive Spiegel (5) auf der Vorderseite des Speicherleuchtschirmes (1) angebracht ist, in die die Strahlen (6) der ersten Wellenlänge eintreten, und daß auf der Rückseite eine Anti-Reflexionsschicht (2) angeordnet ist.

## Claims

1. A luminescent storage screen (1) having a stimulable luminescent storage material for the latent storage of x-ray images, wherein read-out of the x-ray images is effected by excitation through radiation (6) of a first wavelength, whereupon radiation (8 to 12) of a second wavelength is emitted and picked up by a detector, characterised in that the luminescent storage material is transparent in the region of the two wavelengths, and in that the luminescent storage screen (1) is provided with at least one optical surface layer (2, 4) which reduces the reflections which occur when the radiation of the first wavelength emerges from the luminescent storage screen.

2. Luminescent storage screen according to claim 1, characterised in that an anti-reflection layer (2) is applied to one side of the luminescent storage screen (1).

3. Luminescent storage screen according to claim 1 or 2, characterised in that a wavelength-selective mirror (4, 5) is applied to a side of the luminescent storage screen (1) which forms an anti-reflection layer for radiation (6, 7) of the first wavelength, and a reflection layer for radiation (8 to 12) of the second wavelength.

4. Luminescent storage screen according to one of claims 1 to 3, characterised in that the wavelength-selective mirror (4) is applied to the back of the luminescent storage screen (1) from which the radiation (6) of the first wavelength emerges.

5. Luminescent storage screen according to one of claims 1 to 4, characterised in that the front of the luminescent storage screen (1) is provided with a non-reflection layer (3) into which the radiation (6) of the first wavelength enters.

6. Luminescent storage screen according to claim 3, characterised in that the wavelength-selective mirror (5) is applied to the front of the luminescent storage screen (1) into which the radiation (6) of the first wavelength enters, and in that an anti-reflection layer (2) is arranged on the back.

## Revendications

1. Écran luminescent de mémorisation (1) comportant une substance luminescente stimulable de mémorisation pour la mémorisation latente de radiographies, dans lequel la lecture des radiographies s'effectue par excitation au moyen d'un rayonnement (6) d'une première longueur d'onde, à la suite de quoi des rayonnements (8 à 12) d'une seconde longueur d'onde et détectés par un détecteur, sont émis, caractérisé par le fait que la substance luminescente de mémorisation est transparente dans le domaine des deux longueurs d'onde et l'écran luminescent de mémorisation (1) est muni d'au moins une couche optique antiréfléchissante (2, 4), qui réduit les réflexions, qui apparaissent lorsque les rayonnements de la première longueur d'onde sortent de l'écran luminescent de mémorisation.

2. Écran luminescent de mémorisation suivant la revendication 1, caractérisé par le fait qu'une couche antiréfléchissante (2) est déposée sur une face de l'écran luminescent de mémorisation (1).

3. Écran luminescent de mémorisation suivant la revendication 1 ou 2, caractérisé par le fait qu'un miroir (4, 5), sélectif du point de vue des longueurs d'onde, est appliqué sur une face de l'écran luminescent de mémorisation (1) et forme une couche antiréfléchissante pour les rayonnements (6, 7) de la première longueur d'onde et une couche réfléchissante pour les rayonnements (8 à 12) de la seconde longueur d'onde.

4. Écran luminescent de mémorisation suivant l'une des revendications 1 à 3, caractérisé par le fait que le miroir (4) sélectif du point de vue des longueurs d'onde est disposé sur la face arrière de l'écran luminescent (1), de laquelle sortent les rayonnements (6) de la première longueur d'onde.

5. Écran luminescent de mémorisation suivant l'une des revendications 1 à 4, caractérisé par le fait que la face avant de l'écran luminescent de mémorisation (1) est munie d'une couche antireflet (3), dans laquelle entrent les rayonnements (6) de la première longueur d'onde.

6. Écran luminescent de mémorisation suivant la revendication 3, caractérisé par le fait que le miroir (5), sélectif du point de vue des longueurs d'onde, est disposé sur la face avant de l'écran luminescent de mémorisation (1), dans laquelle entre les rayonnements (6) de la première longueur d'onde, et qu'une couche antiréfléchissante (2) est disposée sur la face arrière.
